# EUROPEAN PATENT SPECIFICATION

(11) **EP 3 927 566 B1**
(45) Date of publication and mention of the grant of the patent: **20.12.2023**
(21) Application number: 20712681.4
(22) Date of filing: 19.02.2020
(51) Int. Cl.: B60G 21/055, B60G 5/04, B60G 11/18, B60G 11/20

(54) **HEAVY VEHICLE**
SCHWERLASTFAHRZEUG
VÉHICULE LOURD

(30) Priority: 19.02.2019 IT 201900002405
(43) Date of publication of application: 29.12.2021
(73) Proprietor: IVECO S.P.A., 10156 Torino (IT)
(72) Inventor: PEREIRA DE LEMOS, Jose Francivaldo, Bairro São Geraldo Sete Lagoas MG (BR)
(74) Representative: Studio Torta S.p.A.
(86) International application number: PCT/IB2020/051384
(87) International publication number: WO 2020/170158

(56) References cited:
- EP-A2- 1 110 848
- BR-A2-102016 014 893
- JP-A- S4 915 121
- JP-U- H03 107 210

## Description

### TECHNICAL FIELD

The invention relates to a heavy vehicle.

### KNOWN STATE OF THE ART

The suspensions of heavy vehicles, especially vehicles for heavy transportation to be used in severe conditions such as in mines or in plantations, need to be sufficiently sturdy and, at the same time, to ensures features, for example damping, stiffness and weight, that are such as to allow the vehicle to be easily driven.

In order to fulfil this need, an improved suspension system was developed and disclosed in patent BR102016014893-6. It discloses the preamble of claim 1.

This suspension system is a "tandem" suspension system, namely a system in which two axles of a vehicle are connected to one another and to the frame of the vehicle through the suspension system itself.

Basically, the described suspension system comprises, for each right and left side of two axles, a pair of connection elements, each connected, at its ends, respectively, to one of the axles and to a stabiliser bar, which is carried by the frame of the vehicle in a movable manner, said ends being connected to the respective element by means of movable connections.

A system of this type ensures very good properties of the suspension system in terms of damping and stiffness, which make it easy for the vehicle to be driven. This system with very good suspension properties can be especially used in extremely heavy vehicles and/or in difficult paths, such as off-road paths, though having a limited weight. Furthermore, since the elements of the suspension can easily be manufactured and are identical to one another, the system is economic and simple to be assembled.

However, the movable connections between the connection elements and the axle and/or the frame have a tendency to wear and break during the use of the vehicle. Moreover, the movable connections cannot be used in vehicles having different attitudes and need to be re-designed accordingly. JP H03107210 U, JPS4915121 A, EP1110848 disclose further examples of known suspension systems.

Therefore, there is a need for suspension systems for heavy vehicles which can solve the problems discussed above.

The object of the invention is to fulfil the needs discussed above.

### SUMMARY OF THE INVENTION

The aforesaid object is reached by a heavy vehicle according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1 is a perspective view showing a vehicle comprising a frame and a suspension system according to the invention;
- Figure 2 is a perspective view showing the suspension system according to the invention;
- Figure 3 is a perspective view showing the suspension system according to the invention with parts removed for greater clarity;

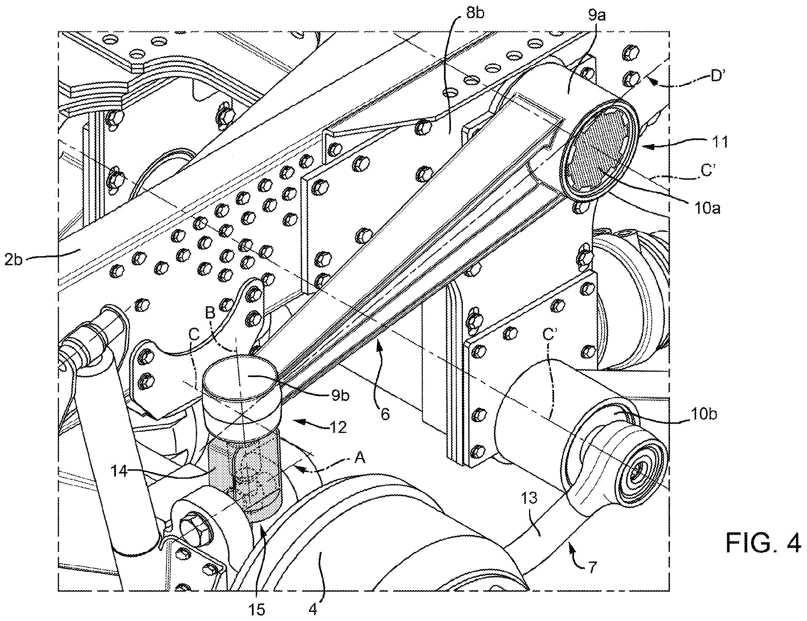

- Figure 4 is an enlarged perspective view showing a portion of the suspension system according to the invention;
- Figure 5A is a schematic cross-sectional view of a connection element of the suspension system according to the invention; and
- Figure 5B is a schematic cross-sectional view of an alternative embodiment of the element of figure 5A.

### DETAILED DESCRIPTION OF THE INVENTION

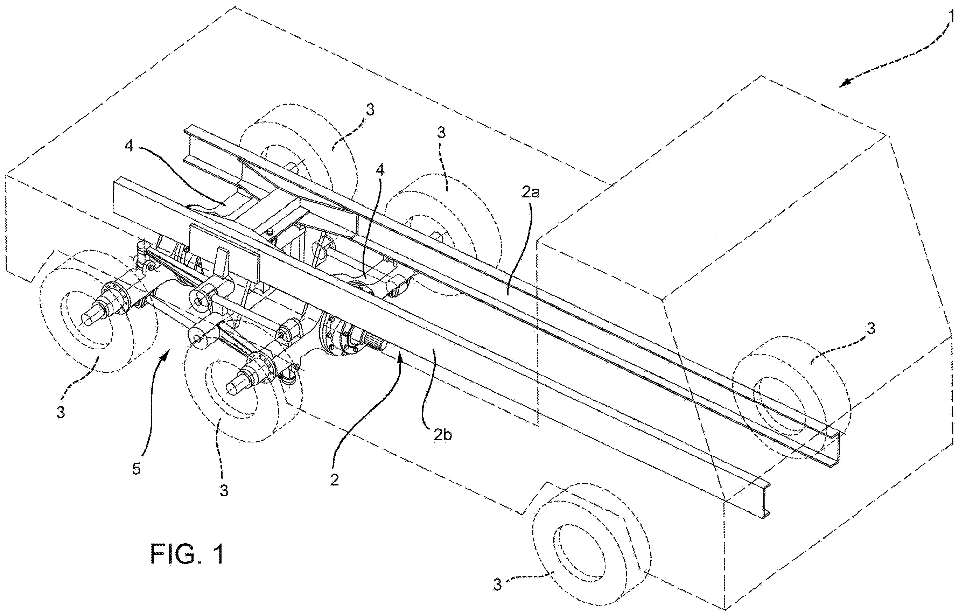

Figure 1 shows a vehicle 1 comprising a known frame 2 basically comprising a pair of longitudinal members 2a, 2b and a plurality of wheels 3 carried in pairs by respective axles 4.

The vehicle 1 further comprises a suspension system 5 according to the invention, which is configured to connect at least two axles 4 to the frame 2, as described hereinafter.

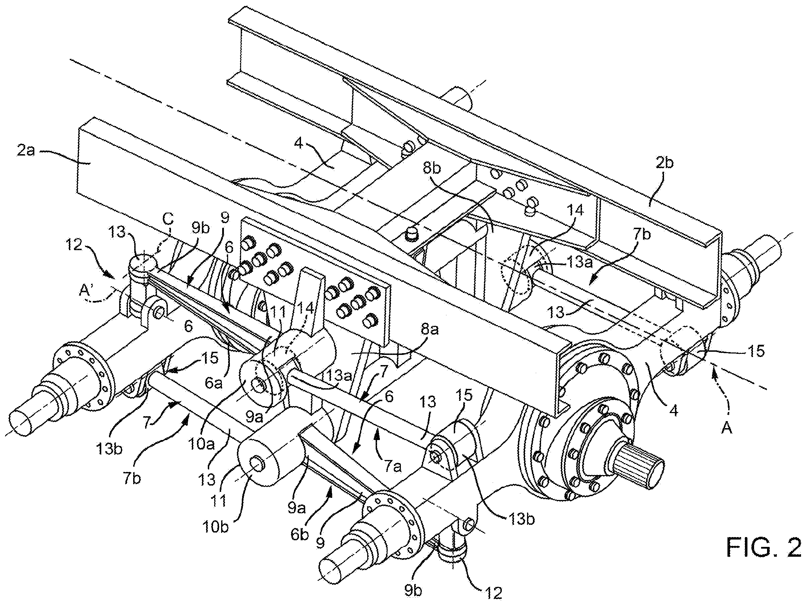

For now, reference will be made to one single side of the suspension system 5, for example the right side of the suspension system 5 relative to a driving direction along a longitudinal axis A of the vehicle 1, as shown in figure 2.

The suspension system 5 basically comprises two pairs of connection elements 6, 7, respectively a first upper 6a and lower connection element 6b and a second upper 7a and lower connection element 7a, each of them being respectively connected, at a first one of its ends, to one of the axles 4 and, at a second end opposite the first one, to a stabiliser bar 10 carried by the frame 2 in a movable manner.

These connections of the ends of the connection elements 6, 7 are movable connections, as described hereinafter, and, according to the invention, at least one of them is a connection having a possibility of rotation around three axes perpendicular to one another, specifically around an axis A', which is parallel to the axis A, around a vertical axis B and around an axis C, which is perpendicular to the axes A' and B.

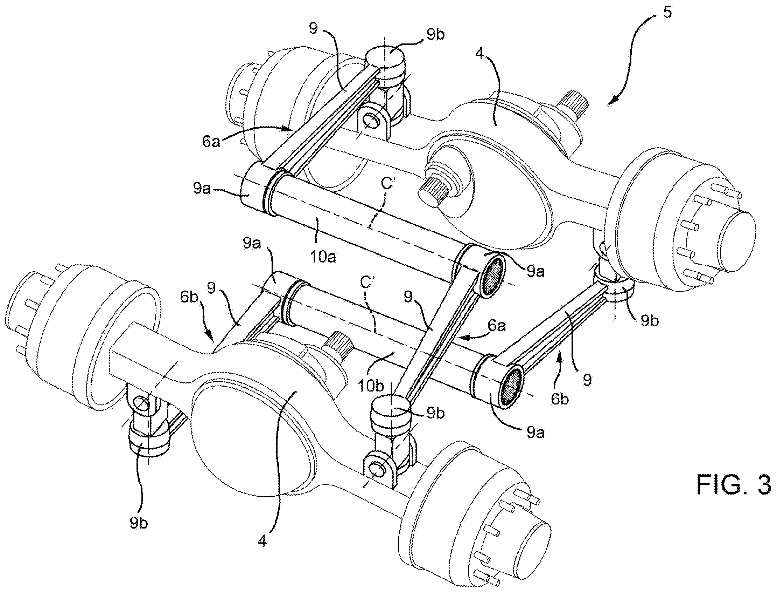

The suspension system 5 is, on the left side, as one can partially deduce from figure 2 and better see in figure 3, mirror-like relative to the right side, with a chiasmus structure. This means that, if, on one side, for example on the right side, an end of a connection element 6,7, for example the first rear upper element 6a, is connected to the axle 4, on the left side, the end of the second rear connection element 7a is connected to the axle 4 in an upper position, and the same applies to all four combinations of side and position.

Each first upper and lower connection element 6a, 6b advantageously comprises a metal torsion bar 9. With reference to one single stabiliser bar 9, for example the stabiliser bar 9 of the first upper connection element 6a, it comprises a first end 9a, which is connected, in a movable manner by means of a first movable connection 11, to an upper stabiliser bar 10a, which is supported so that it can freely rotate around a longitudinal axis C' of its, which is parallel to the axles 4, between the side members 8a, 8b, and a second end 9b, which is connected to the axle 4 in a movable manner by means of a second movable connection 12.

Similarly, each second upper and lower connection element 7a, 7b advantageously comprises a metal thrust bearing bar 13. With reference to one single thrust bearing bar 13, for example the thrust bearing bar 13 of the second lower connection element 7b, it comprises a first end 13a, which is connected, in a movable manner by means of a first movable connection 14, to a lower stabiliser bar 10b, which is supported so that it can freely rotate around a longitudinal axis C' of its, which is parallel to the axles 4, between the side members 8a, 8b, and a second end 13b, which is connected to the axle 4 in a movable manner by means of a second movable connection 15.

According to the embodiment described herein, the second movable connection is the connection provided with all degrees of freedom of rotation, whereas the movable connections 11, 14 and 15 are hinges having one single degree of rotation. In particular, the movable connections 11, 14 and 15 are hinges that allow the respective end to rotate around rotation axes which are parallel to one another and perpendicular to the longitudinal axis A of the vehicle. These hinges advantageously are hinges between metal elements or obtained by means of bushings.

As already mentioned above, the second movable connections 12 are configured to allow for a complete freedom of rotation of the respective ends 9b of the torsion bars 9 around the aforesaid axes A', B, C.

In particular, said movable connection 12 comprises a ball joint 13, which is carried by a support 14, which is connected to the axle 4 by means of a hinge 15 so as to be free to rotate. The hinge 15 advantageously allows the support 14 to rotate around an axis A', which is perpendicular to the longitudinal axis of the respective axle 4.

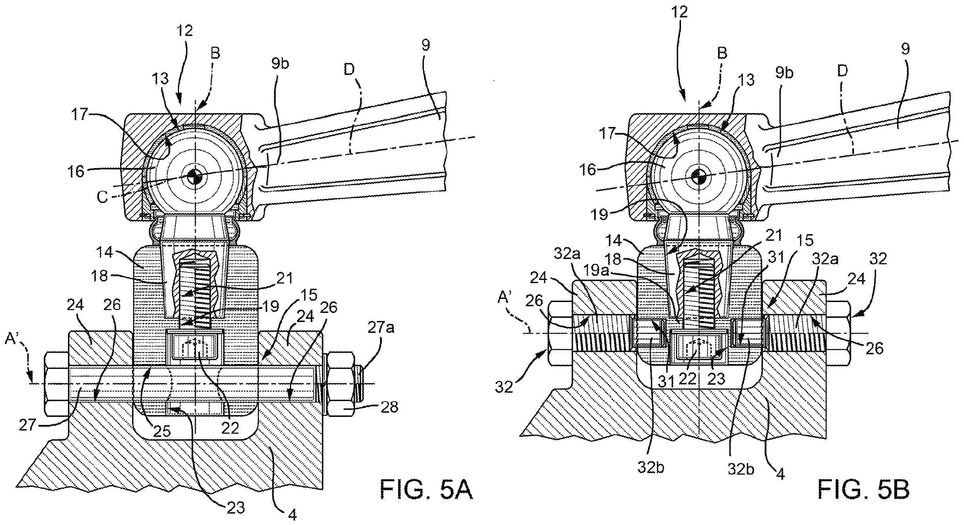

Figures 5A, 5B show two embodiments of said movable connections 12 for different attitudes of the vehicle 1. Said movable connections 12 are identical to one another, except for the height of the support 14 and the way in which the hinge 15 is manufactured, as described hereinafter.

In both embodiments, the ball joint 13 comprises a rolling ball body 16, which is housed inside a dedicated opening 17 obtained at the end 9b of the torsion bar 9. The ball joint 13 further comprises an anchoring portion 18, which is connected to the rolling ball body 16 and is preferably manufactured as one single piece together with it.

The anchoring portion 18 vertically extends towards the axle 4 from the rolling ball body 16 inside a hole 19 made inside the support 14, which has dimensions that are such as to be complementary to the outer shape of the anchoring portion 18.

The anchoring portion 18 is configured to define, with the support body 14, a reversible mechanical coupling. In particular, in the embodiment described herein, the anchoring portion 18 defines, on the inside, a threaded seat 21, which is configured to cooperate with a threaded element 22. In particular, the threaded element 22 is configured to go through a bottom wall 19a of the hole 19, going through a hole 23 made in the support body 14 on the side opposite the hole 19 relative to the wall 19a.

The support body 14 has a substantially prismatic shape and is preferably made as one single piece and of a metal material, such as steel. The support body 14 is carried by the axle 4 in a movable manner by means of the hinge 15 obtained between a pair of flanges 24 extending on the outside of the axle 4 in a vertical direction and spaced apart from one another by a distance that is such as to allow for the insertion of the support body 14 with clearance.

According to the embodiment of figure 5A, the support body 14 extends in a vertical direction more than the support body 14 of figure 5B and, moreover, it comprises a through hole 25 going through the entire support body 14 and perpendicular to the holes 19 and 23. The hole 25 is coaxial to a pair of holes 26, each made in one of the flanges 24.

The holes 25 and 26 are configured to house, on the inside, a pin 27 defining an outer surface, which is designed to cooperate in a sliding manner relative to the body 14, thus creating the hinge 15. The pin 27 advantageously comprises an end portion 27a extending past one of the flanges 24, said end portion 27a being preferably threaded and configured to cooperate with a nut 28 in order to fix the pin 27 to the flanges 24.

According to the embodiment of figure 5B, as already mentioned above, the support body 14 extends in a vertical direction less than the support body 14 of figure 5B and comprises a pair of dead holes 31 extending inside the support body 14 perpendicularly to the holes 19 and 23. The flanges 24, just like the case of figure 5A, are provided with through holes 26 going through the flanges 24.

In this configuration, the hinge 15 is defined by a pair of pins 32 comprising an intermediate threaded portion 32a, which is configured to cooperate with a respective thread obtained inside the holes 26, and an end portion 32b, which is configured to be housed in a sliding manner inside the holes 31 of the support body 14.

According to a further aspect of the invention, the torsion bars 9 have a variable cross section along a longitudinal axis S thereof.

In particular, the torsion bars 9 have a cross section, preferably with a substantially trapezoidal shape, which is variable along the axis D from a cross section area with a maximum value at the first end 9a to a cross section area with a minimum value at the second end 9b. In particular, looking at the torsion bar 9 from the side, the upper and lower edges thereof get closer to one another starting from the end 9a to the end 9b and, similarly, looking at the torsion bar 9 in an axial direction, the right and left edges thereof get closer to one another starting from end 9a to the end 9b.

The embodiment of the suspension system 5 described above works as follows.

When the wheel 1 is stressed towards the frame 2 of the vehicle, or vice versa, the elements making up the suspension allow these stresses to be damped, thus preventing these loads from being transmitted to the frame 2 and, hence, to the vehicle and to the driver thereof.

In particular, the shape and the relative position of the elements described above allow for an ideal damping in all dynamic conditions and/or positions, though with a limited weight.

More in detail, the thrust bearing bars 13 allow the movements of the axles 4 along the longitudinal axis A of the vehicle to be limited, whereas the connection between the torsion bars 9 and the stabiliser bars 10 between the two axles 4 and the frame 2 lead to torques acting in the directions of the other two axes perpendicular to the axis A.

Thanks to the fact that the connection 12 has all degrees of freedom of rotation, it is possible to have, in this area, small stress loads, thus having a longer duration of the connection and a reduction in the thickness of the stabiliser bar.

Owing to the above, the advantages of a suspension system 5 according to the invention are evident.

Thanks to the use of a movable connection 12 which can rotate around all rotation axes, the greater loads are supported by the remaining metal connections, which, hence, are capable of lasting longer in time.

Furthermore, this state of smaller loads allows for a reduction in the cross section of the torsion bar 9 at the end of the movable connection 12, thus leading to a lighter weight and to smaller manufacturing costs of the suspension system 5.

Generally speaking, the structure of the suspension system 5 can bear great loads and, at the same time, ensures a good drivability of the vehicle in adverse road conditions, though maintaining low manufacturing costs and a small weight.

Furthermore, the particular configuration of the movable connection 12 with total degrees of freedom of rotation allows the same axle 4 and the same suspension system 5 to be used for different attitudes of the vehicle, changing the sole support body 14 with consequent savings due to the mass production of the elements that are identical to one another.

Finally, the suspension system 5 according to the invention can be subjected to changes and variants, which, though, do not go beyond the scope of protection set forth in the appended claims.

For example, the movable connections described herein and the shape of the connection elements 6 and 7 can be changed according to what is claimed herein.

In addition, there could be more elements than the ones described above, depending on the type and tonnage of the vehicle.

## Claims

1. A heavy vehicle (1) provided with a frame (2) connected to a plurality of wheels (3) carried in pairs by respective axles (4), and a suspension system (5) connecting said axles (4) to said frame (2), said suspension system (1) comprising, for each side of said vehicle (1), a first upper (6a) and lower (6b) connection element and a second upper (7a) and lower (7b) connection element, each of said connection elements (6, 7) being connected at its ends respectively to one of said axles (4) and to a stabiliser bar (10) movably carried by said frame (2) by means of respective movable connections (11, 12, 14, 15), **characterized in that** at least one movable connection (12) comprises a ball joint (16) carried by a support body (14) movably carried by the respective axle (4) of said vehicle (1) by means of a hinge (15), the remaining movable connections (11, 14, 15) comprising hinges, said hinges allowing rotation of the respective ends of said connection elements (6, 7) around axes all parallel to one another.

2. Vehicle according to claim 1, wherein said first connection elements (6) comprise a torsion bar (9).

3. Vehicle according to claim 1 or 2, wherein said second connection elements (7) comprise a thrust bearing bar (13).

4. Vehicle according to any of the preceding claims wherein said ball joint (16) can be reversibly connected to said support body (14).

5. Vehicle according to any of the preceding claims, wherein said hinge (15) between said support body (14) and said axle (4) comprises a pin (27) passing through said support body (14) and reversibly fixed to said axle (4).

6. Vehicle according to claim 4 or 5, wherein said hinge (15) between said support body (14) and said axle (4) comprises a pair of pins (32) inserted, blind, into said support body (14), said pins (32) being reversibly fixed to said axle (14).

7. Vehicle according to one of the claims from 2 to 6, wherein said torsion bar (9) has a cross section variable along its longitudinal axis.

8. Vehicle according to claim 7, wherein said cross section varies from a maximum at an end (9b) connected to said stabiliser bar (10) to a minimum value at an end (9a) configured to be connected to said axle (4).

## Patentansprüche

1. Schwerlastfahrzeug (1), mit einem Rahmen (2), der mit einer Mehrzahl von Rädern (3) verbunden ist, welche paarweise durch jeweilige Achsen (4) getragen werden und mit einem Aufhängungssystem (5), welches die Achsen (4) mit dem Rahmen (2) verbindet, welches Aufhängungssystem (1) an jeder Seite des Fahrzeugs (1) ein erstes oberes (6a) und unteres (6b) Verbindungselement und ein zweites oberes (7a) und unteres (7b) Verbindungselement umfasst, wobei jedes der Verbindungselemente (6, 7) an seinen Enden jeweils mit einer der Achsen (4) und mit einem Stabilisierungsstab (10) verbunden ist, der beweglich durch den Rahmen (2) mittels jeweils beweglicher Verbindungen (11, 12, 14, 15) getragen wird, **dadurch gekennzeichnet, dass** die zumindest eine bewegliche Verbindung (12) ein Kugelgelenk (16) umfasst, das von einem Lagerkörper (14) getragen wird, der beweglich durch die jeweilige Achse (4) des Fahrzeugs (1) durch ein Scharnier (15) getragen wird, und dass die verbleibenden beweglichen Verbindungen (11, 14, 15) Scharniere umfassen, welche Scharniere eine Rotation der jeweiligen Enden der Verbindungselemente (6, 7) um parallel zueinander stehende Achsen zulassen.

2. Fahrzeug gemäß Anspruch 1, bei welchem die ersten Verbindungselemente (6) einen Torsionsstab (9) umfassen.

3. Fahrzeug gemäß Anspruch 1 oder 2, bei welchem die zweiten Verbindungselemente (7) einen Drucklagerstab (13) umfassen.

4. Fahrzeug gemäß einem der vorhergehenden Ansprüche, bei welchem das Kugelgelenk (16) lösbar mit dem Lagerkörper (14) verbunden werden kann.

5. Fahrzeug gemäß einem der vorhergehenden Ansprüche, bei welchem das Scharnier (15) zwischen dem Lagerkörper (14) und der Achse (4) einen Stift (27) umfasst, der den Lagerkörper (14) durchstößt und lösbar an der Achse (4) befestigt ist.

6. Fahrzeug gemäß Anspruch 4 oder 5, bei welchem das Scharnier (15) zwischen dem Lagerkörper (14) und der Achse (4) ein Paar von Stiften (32) umfasst, die blind in den Lagerkörper (14) eingesetzt sind, und welche Stifte (32) lösbar an der Achse (14) befestigt sind.

7. Fahrzeug gemäß einem der Ansprüche 2 bis 6, bei welchem der Torsionsstab (9) einen veränderlichen Querschnitt entlang seiner Längsachse aufweist.

8. Fahrzeug gemäß Anspruch 7, bei welchem der Querschnitt von einem Maximum an einem Ende (9b), welches mit dem Stabilisierungsstab (10) verbunden ist, bis zu einem Minimalwert an einem Ende (9a), das zur Verbindung mit der Achse (4) ausgebildet ist, variiert.

## Revendications

1. Véhicule lourd (1) doté d'un châssis (2) relié à une pluralité de roues (3) supportées par paires par des essieux respectifs (4), et d'un système de suspension (5) reliant lesdits essieux (4) audit châssis (2), ledit système de suspension (1) comprenant, pour chaque côté dudit véhicule (1), un premier élément de liaison supérieur (6a) et inférieur (6b) et un deuxième élément de liaison supérieur (7a) et inférieur (7b), chacun desdits éléments de liaison (6, 7) étant relié au niveau de ses extrémités respectivement à l'un desdits essieux (4) et à une barre stabilisatrice (10) supportée de façon mobile par ledit châssis (2) au moyen de liaisons mobiles respectives (11, 12, 14, 15), **caractérisé en ce qu'**au moins une liaison mobile (12) comprend un joint à rotule (16) supporté par un corps de support (14) supporté de façon mobile par l'essieu respectif (4) dudit véhicule (1) au moyen d'une charnière (15), les liaisons mobiles restantes (11, 14, 15) comprenant des charnières, lesdites charnières permettant une rotation des extrémités respectives desdits éléments de liaison (6, 7) autour d'axes tous parallèles les uns aux autres.

2. Véhicule selon la revendication 1, dans lequel lesdits premiers éléments de liaison (6) comprennent une barre de torsion (9).

3. Véhicule selon la revendication 1 ou 2, dans lequel lesdits deuxièmes éléments de liaison (7) comprennent une barre de palier de butée (13).

4. Véhicule selon l'une quelconque des revendications précédentes dans lequel ledit joint à rotule (16) peut être relié de manière réversible audit corps de support (14).

5. Véhicule selon l'une quelconque des revendications précédentes, dans lequel ladite charnière (15) entre ledit corps de support (14) et ledit essieu (4) comprend une broche (27) passant à travers ledit corps de support (14) et fixée de manière réversible audit essieu (4).

6. Véhicule selon la revendication 4 ou 5, dans lequel ladite charnière (15) entre ledit corps de support (14) et ledit essieu (4) comprend une paire de broches (32) insérées, aveugles, dans ledit corps de support (14), lesdites broches (32) étant fixées de manière réversible audit essieu (14).

7. Véhicule selon l'une quelconque des revendications 2 à 6, dans lequel ladite barre de torsion (9) présente une section transversale variable le long de son axe longitudinal.

8. Véhicule selon la revendication 7, dans lequel ladite section transversale varie d'une valeur maximale à une extrémité (9b) reliée à ladite barre stabilisatrice (10) à une valeur minimale au niveau d'une extrémité (9a) configurée pour être reliée audit essieu (4) .
